Europäisches Patentamt

European Patent Office

Office européen des brevets

(19)

(11) Publication number: 0 133 738

A1

# (12) EUROPEAN PATENT APPLICATION

(21) Application number: 84303772.2

(22) Date of filing: 05.06.84

(51) Int. Cl.⁴: B 27 B 9/04

(30) Priority: 04.08.83 US 520474

(43) Date of publication of application:
06.03.85 Bulletin 85/10

(84) Designated Contracting States:
AT BE CH DE FR GB IT LI LU NL SE

(71) Applicant: Zelli, Joseph M.
2215 Woodland Spring
Houston Texas 77077(US)

(72) Inventor: Zelli, Joseph M.
2215 Woodland Spring
Houston Texas 77077(US)

(74) Representative: Lambert, Hugh Richmond et al,
D. YOUNG & CO. 10 Staple Inn
London, WC1V 7RD(GB)

(54) Adjustable platform guide for circular saws.

(57) The saw-guide platform device (1) of this invention is intended to guide a portable power saw (17) over a work piece (2). The saw has a flat circular blade (17') and a flat base plate (15). The device is characterised by an elongated flat deck (5), a flat shoulder (4) extends outwardly from one side of the deck and is made of a material which is cutable by the saw blade. The shoulder (4) has an outer edge (30) which provides a first trimmable blade-guide edge (30) adapted to indicate a predetermined line of cut and to guide the blade therealong. The top surface (10) of the deck and the top surface (10') of the shoulder together provide a flat support surface for the base plate. Upstanding means (6) extend above the top surface (10) of the deck for engaging and guiding the farther edge of the base plate so that the blade will be guided by the shoulder's outer edge (30) during the sawing of the work piece.

Fig. 1

EP 0 133 738 A1

Croydon Printing Company Ltd

## ADJUSTABLE PLATFORM GUIDE FOR CIRCULAR SAWS

Portable circular power saws are widely used by professional carpenters. Because such power saws are relatively compact and inexpensive, they are also now widely used by amateurs as well. When a power saw is guided free-hand, it is nearly impossible to cleanly cut a work piece for a depth which is less than the bite of the blade. Generally, such cuts further require planing or sanding to obtain a clean cut.

In using such power saws, there is a need for a saw-guide device which allows cuts to be done on a work piece for a depth which is less than the bite of the blade, as precisely and quickly as for larger cuts. There is a further need for such a device to be useable with power saws having differently-sized base plates.

Various saw-guide devices already have been patented. Their primary object is to allow for the making of accurate long cuts. Such devices are described, for example, in U.S. patents Nos. 3,186,452, 3,741,063, 3,830,130, 3,874,261, 3,983,776 4,028,976, 4,050,340, 4,059,038, 4,077,292 and 4,095,632. Most of the patented saw guides have a base member that is cut by the saw's own blade on the first cut thereof to custom fit the saw-guide device to the saw's particular base plate.

But, in using the known saw guides, one finds major drawbacks therein because the guides either are unable to make accurate long cuts, or tend to chip and splinter some types of work pieces along the lines of cut, or are relatively slow and cumbersome to use, or require separate clamping means, or are relatively fragile and are subject to warping.

One saw guide intended to reduce splintering is described in Neal's U.S. patent No. 4,075,920 as having a guide surface for guiding the base plate's edge farthest from the saw blade, and another edge made from a trimmable material for guiding the saw blade. This other edge is cut to size by the blade when making its first cut. But making further adjustments to this other edge are difficult or impossible because the trimmable material portion is not wide enough and is secured to the rest of the guide by a tongue-and-groove joint. An undesirable consequence is that when a power saw having a larger base plate is employed, or when the blade-guiding edge becomes used up, a new piece of trimmable material has to be added. Thus, Neal's device does not provide a renewable blade-guiding edge normally required for power saws with differently-sized base plates and for when the teeth of the saw blade wear down. Blunting of the blade's teeth is common due to hidden nails frequently found under veneer of doors, and also due to unavoidable wear.

An attempt to overcome the drawbacks encountered in the use of Neal's saw guide is described in U.S. patent No. 4,307,513 to Genge whose saw-guide device includes a base member made of an easily cutable material such as masonite, and a metallic shield member which has the same width as the base member. The shield member is placed on top of and overlies the base member and is adjustably secured thereto by bolts. A clamp track and clamps are provided near the outer edge of the shield. In use, the Genge device is placed over and is clamped down to the work piece. Its base member is positioned to overhang the work piece to facilitate cutting off the base member. The first cut produces the desired original blade-guide edge. The edge of the saw's base plate farthest from the saw blade abuts against the shield's inner edge which serves as a guide surface for the base plate. The base member is moved forward and recut to provide a second guide edge. The distance from the guide surface to the second guide edge will again accommodate the saw's base plate, so that the saw blade will again abut and be guided by the second guide edge of the base member. But the entire weight of the saw rests on and is distributed over the portion of Genge's base member, which is not overlain by the shield member, and splintering is very likely to occur because the lower surface of the base member is not tightly pressed against, and therefore does not provide adequate downward support for, that portion of the work piece that is retained after the cut is made. Also, there is a tendency for the base member to separate from the shield member. Such separation may cause the guide surface on the shield member to lose contact with the edge of the saw's base plate. Such loss of contact may produce a non-linear cut. Moreover, because the base member carries the entire weight of the power saw, it tends to want to rotate relative to the overlaying shield member, thereby further promoting the tendency for the base member to separate from the shield member.

It is therefore a main object of the present invention to provide a new and improved platform device for guiding circular power saws, which overcomes the above-mentioned and other known drawbacks and problems associated with known saw-guide devices, and to provide a relatively simple-to-construct saw-guide platform, which will allow long, linear, splinterless cuts to be made with ease even by amateur carpenters.

The saw-guide platform device of this invention is intended to guide a portable power saw over a work piece. The saw has a flat circular blade and a flat base plate. The device is characterized by an elongated flat deck, a flat shoulder extends outwardly from one side of the deck and is made of a material which is cutable by the saw blade. The shoulder has an outer edge which provides a first trimmable blade-guide edge adapted to indicate a predetermined line of cut and to guide the blade therealong. The top surface of the deck and the top surface of the shoulder together provide a flat support surface for the base plate. Upstanding means extend above the top surface of the deck for engaging and guiding the farther edge of the base plate so that the blade will be guided by the shoulder's outer edge during the sawing of the work piece.

In a preferred embodiment, the upstanding means is a rail. The shoulder is detachably secured to the deck. The upstanding rail is adjustably mounted on top of the deck and provides a guide surface for the farther edge of the base plate. A cut is made in the trimmable shoulder to form an original blade-guide edge which abuts the saw blade and delineates the lines of cut which will be made by the blade. Frequent renewing of the blade-guide edge is easily possible by first moving the rail further away from the used up original blade-guide edge, and then cutting a new blade-guide edge in the trimmable shoulder. In the most preferred embodiment, a pair of such trimmable shoulders extend from the opposite sides of the deck. From under each shoulder downwardly extend small nails which rapidly and conveniently grip each shoulder to the work piece.

Ways of carrying out the invention are described with reference to the drawings which illustrate specific preferred embodiments and in which:

Fig. 1 is an isometric view of a preferred two-shoulder embodiment of the novel saw-guide platform which is shown in position on a work piece and in the process of guiding a circular power saw over the work piece;

Fig. 2 is an exploded isometric view of the platform shown in Fig. 1;

Fig. 3 is a sectional view taken on line 3-3 of Fig. 1;

Fig. 4 is a sectional view taken on line 4-4 of Fig. 1;

Fig. 5 is a fractional sectional view taken on line 5-5 of Fig. 1;

Fig. 6 is a fractional, upside- down, isometric view of the platform shown positioned over one side of a door;

Fig. 7 is a sectional view taken on line 7-7 of Fig. 6, showing a router cutting out a hinge mortise in the side of the door; and

Fig. 8 is an isometric view of a simplified embodiment of the saw-guide platform having but a single shoulder.

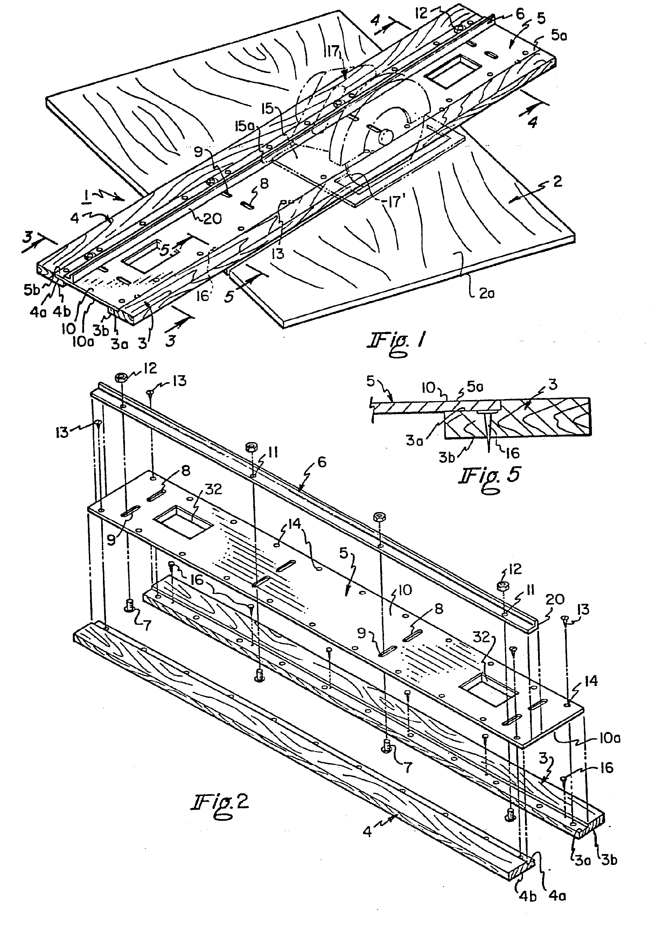

With reference now to Figures 1-7, there is shown a preferred embodiment of the saw-guide platform of this invention, generally designated as 1, which is adapted to trim a work piece 2. Platform 1 comprises a right (as viewed in Fig. 2) flat shoulder 3 and a left flat shoulder 4. Each shoulder is made of a relatively-soft, trimmable material such as 8 mm plywood. Also provided are: a flat deck 5, which usually has the same length as that of shoulders 3 and 4 and is made from a relatively hard material, as from a 2 mm aluminum sheet.

An upstanding guide-rail 6 is provided which can be made of an aluminum beam that is L-shaped. Rail 6 is placed on the top surface 10 of deck 5 and is adjustably secured thereto by bolts 7 (Figs. 2-4) which extend through longitudinally-spaced trasverse slots 8 or 9 in deck 5 and through appropriate holes 11 in rail 6. Fasteners 12 screw over bolts 7 to secure rail 6 to deck 5.

In Figs. 1 and 2 bolts 7 extend through slots 9 when the blade-guide edge (as subsequently described) is obtained from shoulder 3, and bolts 7 extend through slots 8 when the blade-guide edge is obtained from shoulder 4.

In Fig. 2 the L-shaped rail 6 is positioned for using slots 9, and it is rotated 180 for using slots 8. Thus, platform 1 is symmetrical relative to a longitudinal center plane.

The inner longitudinal edges 3a, 4a of shoulders 3, 4, respectively, are detachably secured to the opposite longitudinal edges 5a, 5b of deck 5 by screws 13 which fit in countersunk holes 14 in deck 5, so that the heads of the screws are flush with or slightly below the upper surface 10 of deck 5. Countersinking in this manner prevents screws 13 from marring the saw's base plate 15.

The bottom face 10a of deck 5 is recessed from the bottom faces 3b, 4b of shoulders 3, 4, respectively. The recessed space 10b below deck 5 accommodates the heads of bolts 7. In this manner, marring of the upper surface 2a of the work piece 2 is avoided. Space 10b also allows compression loads from saw 17 to be transferred to shoulders 3, 4 where they are mostly needed.

Platform 1 is attached to work piece 2 by very small nails 16 which bite into the work piece by making therein tiny holes that are practically invisible to the naked eye. These nails 16 are longitudinally-spaced apart and extend from under the joints formed by the adjoining edges 3a, 4a and 5a, 5b, respectively, between deck 5 and shoulders 3 and 4.

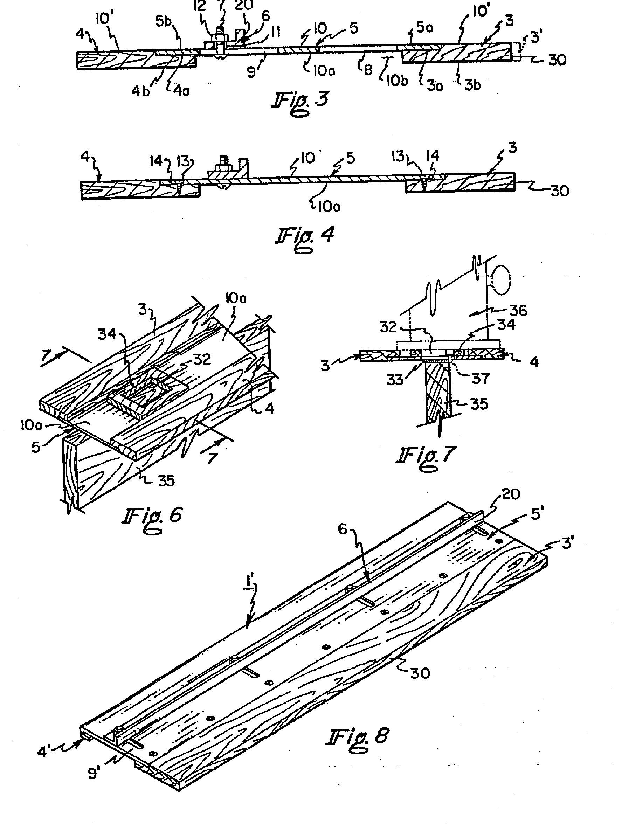

It will be appreciated that saw-guide platform 1 is simple and efficient to use. It is placed on the top surface 2a of work piece 2 and becomes locked thereto against movement in a transverse direction by the tiny nails 16. One shoulder, say shoulder 3, is positioned to overhang work piece 2 to facilitate cutting shoulder 3. For that purpose, base plate 15 is placed on the top surface 10 of deck 5 and on the top surface 10' of shoulder 3. The edge 15a of base plate 15, farthest from saw blade 17', is contiguous with and engages the upstanding guide surface 20 of guide rail 6. Then power saw 17 is energized to sever a portion 3' (Fig.3) of shoulder 3 which yields the desired original blade-guide edge 30 that custom fits platform 1 to the particular base plate 15 of saw 17.

Whenever a new blade-guide edge 30 is required, rail 6 is adjusted by repositioning it away from and parallel to the original edge 30 to fit the width of base plate 15 and again severing a portion 3' of shoulder 3. The distance from the guide surface 20 to the new guide edge 30 will accommodate base plate 15 so that blade 17' of saw 17 will again abut the new guide edge 30 of shoulder 3.

Each original or new guide edge 30 is parallel to the rail's upstanding guide surface 20 and guides saw blade 17' over a previously delineated line of cut to be made by saw 17 on work piece 2.

Splintering along the cut being made is prevented because the lower surface 3b of shoulder 3, as well as edge 30, are both tightly pressed against the upper surface portion 2a of that portion of work piece 2 that will be retained after the cut is made. More particularly, shoulder 3 and edge 30 press tightly against that portion of work piece 2, which is immediately adjacent to the line being cut by saw blade 17'. This downward support by shoulder 3 of upper surface 2a of work piece 2 counteracts the saw blade's tendency to tear away splinters, as the teeth of blade 17' cut upwardly through the upper surface 2a of work piece 2.

With continued use, the original blade-guide edge 30 gets frayed and needs renewing. Renewing may also be required after the teeth of saw blade 17' are sharpened. Saw blades are sometimes damaged after cutting nails hidden under the veneer of a work piece. In all such cases, a new blade-guide edge 30 must be cut. A busy carpenter may have to cut a new blade-guide-edge 30 at least once a week.

Readjustment and cutting of a new blade-guide edge 30 is simple and rapid with platform 1: bolts 7 are loosened up, rail 6 is pulled back and repositioned a short distance further away from blade-guide edge 30, and then bolts 7 are retightened. This rail adjustment frees more surface area on shoulder 3 for cutting a fresh new guide-edge 30, following the procedure previously described for creating the original blade guide edge 30. Usually, about 7 mm of shoulder 3 is cut away during the creation of a new edge 30.

When shoulder 3 is fully used up, a new shoulder 3 can be easily installed by the removal of screws 13 (Fig. 4). On the other hand, in the preferred embodiment, rail 6 is rotated 180° relative to its position on deck 5 shown in Fig. 1. Then, shoulder 4 becomes immediately available for use in exactly the same manner as shoulder 3 was before it got used up. Using two shoulders 3 and 4, on both sides of deck 5, affords economy of space, convenience in use, and leads to greater stability for platform 1 when it is positioned on surface 2a of work piece 2.

In effect, the saw-guide platform 1 contains two saw guides: members 5, 3 and 6 form one saw guide, and members 5, 4 and 6 form the other saw guide, both sharing common members 5 and 6. Rail 6 could be U-shaped and then it would not have to be rotated 180°.

Further advantages will now be more apparent and can be summarized as follows: platform 1 allows cuts to be made with speed and convenience; it requires no clumsy clamping means; it requires a minimum of overall width consistent with needed shoulder adjustability and, therefore, relatively narrow work pieces can be cut therewith; it can have a pair of shoulders 3, 4 which are fixedly and detachably secured to deck 5 and, therefore, there is no likelihood of separation therebetween; the shoulders 3, 4 receive maximum downward pressure for supporting the upper surface 2a of work piece 2, which facilitates the making of a splinterless cut; and the small nails 16 provide a positive and yet simple means to grip the work piece, and these nails receive maximum pressure under the deck-shoulder joints. Additionally, the rigid deck 5 prevents warping of shoulders 3 and 4 and provides a smooth support-and-guide surface 10-10' for the saw's base plate 15. Surface 10-10' is subjected to minimum warping. The metallic deck 5 is less prone to becoming scratched, leading to less friction and a faster cut.

In Figs. 6-7 windows 32 are provided in deck 5 to allow for the making of mortises on a door 35. The frames 34 around the windows 32 add additional upward support for deck 5. Fig. 7 shows a router 36 having a blade 37 in the process of cutting out a moritise 33 on door 35 for a hinge (not shown).

In Fig. 8 is shown a simplified but less desirable embodiment of a platform 1', also in accordance with this invention, which in all material respects is similar to platform 1. Platform 1' utilizes a single shoulder 3'. Deck 5' has only slots 9' and a support leg 4'. The use of platform 1' is identical to that of platform 1 and need not be repeated.

0133738

-11-

CLAIMS

1. A saw-guide platform device for guiding a portable power saw (17) over a work piece (2), said saw (17) having a flat circular blade (17') and a flat base plate (15), said device being characterized by:

an elongated flat deck (5);

a first flat shoulder (3) extending outwardly from one side of said deck (5) and being made of a material which is cutable by the saw blade, said first shoulder having an outer edge (30) which provides a first trimmable blade-guide edge adapted to indicate a predetermined line of cut and to guide the blade therealong, the top surface (10) of the deck (5) and the top surface of the first shoulder (3) together providing a flat support surface for the base plate (15); and

upstanding means (6) extending above the top surface (10) of the deck (5) for engaging and guiding the farther edge of the base plate (15) so that the blade (17') will be guided by the first shoulder's outer edge during the sawing of the work piece.

2. A device according to Claim 1, further characterized by fastening means (7, 8, 12) for adjustably securing said upstanding means (6) to the top surface (10) of the deck (5) to thereby allow to vary the distance between the upstanding means (6) and the blade-guide edge (30).

3. A device according to Claim 2, characterised in that the fastening means comprises slots (8, 9) in the deck (5) extending perpendicularly to the outer edge (30) of said shoulder (3) and fastening bolts (7) engageable through said slots (8, 9) thereby to adjustably secure the upstanding means (6) to the deck (5) whilst permitting the adjustment of the spacing thereof from said outer edge (30).

4. A device according to Claim 1, 2 or 3 characterised in that said upstanding means comprise a rail having a flat upstanding guide surface (20) for engaging and guiding the base plate (15).

5.  A device according to Claim 4 characterised in that said rail (6) has an L-shaped or U-shaped cross section.

6.  A device according to any one of Claims 1 to 5 characterised in that it comprises a second flat shoulder (4) extending from the other side of said deck (5) and likewise being made of a material which is cutable by the saw blade (17'), the second shoulder having an outer edge which provides a second trimmable blade-guide edge adapted to indicate a predetermined line of cut and to guide the blade (17') therealong, and the top surfaces of the deck (5) and of the second shoulder (4) together providing a flat support surface for the base plate (15), and the upstanding means (6) being positioned or positionable on said deck (5) so as to engage and guide the farther edge of the base plate (15) so that the blade (17') will be guided by the second shoulder's outer edge during the sawing of the work piece (2).

7.  A device according to any one of Claims 1 to 6, characterised in that said deck (5) has a thickness which is less than the thicknesses of said first and/or second shoulders (3, 4), whereby the bottom surface (10a) of the deck is, in use, above the plane containing the bottom surface(s) of the first and/or second shoulders.

8.  A device according to any one of Claims 1 to 7 further characterised by a plurality of nails (16) projecting outwardly from the bottom surface of the or each shoulder (3, 4), said nails during the use of the device gripping the top surface of said work piece (2) to thereby maintain intimate contact of the device therewith.

9.  A device according to any one of Claims 1 to 8 characterised in that the deck is of metal and the shoulder(s) (3, 4) is or are of wood.

10.  A device according to any one of Claims 1 to 9, characterised in that the deck (5) has one or more apertures (32) therein providing access to the surface of the work piece (2) for the purpose of cutting mortises therein.

Fig. 1

Fig. 2

Fig. 5

Fig. 3

Fig. 4

Fig. 6

Fig. 7

Fig. 8

## DOCUMENTS CONSIDERED TO BE RELEVANT

EP 84303772.2

| Category | Citation of document with indication, where appropriate, of relevant passages | Relevant to claim | CLASSIFICATION OF THE APPLICATION (Int. Cl. ³) |
|---|---|---|---|
| X,D | US - A - 3 983 776 (FLANDERS) <br> -- | 1,2,3, 4,5 | B 27 B 9/04 |
| X,D | US - A - 4 059 038 (RIETEMA) <br> -- | 1,2,3 | |
| X,D | US - A - 3 741 063 (BRETTHAUER) <br> -- | 1,2,3 | |
| X,D | US - A - 3 830 130 (MOORE) <br> -- | 1,4,5, 8 | |
| X | US - A - 4 224 855 (DES ROCHES) <br> -- | 1 | |
| A,D | US - A - 4 307 513 (GENGE) <br> -- | 2,3 | |
| A | US - A - 4 244 118 (MATUSZAK) <br> -- | 2,3 | TECHNICAL FIELDS SEARCHED (Int. Cl. ³) |
| A,D | US - A - 4 077 292 (COLE) <br> -- | 2,3 | B 27 B |
| A | US - A - 3 586 077 (PEASE) <br> -- | 4,5 | |
| A,D | US - A - 4 028 976 (KUNDIKOFF) <br> -- | 8 | |
| A | US - A - 2 677 399 (GETSINGER) <br> ---- | 10 | |

The present search report has been drawn up for all claims

| Place of search | Date of completion of the search | Examiner |
|---|---|---|
| VIENNA | 24-08-1984 | EBERLE |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82